# EUROPÄISCHE PATENTSCHRIFT

(11) **EP 0 375 860 B1**
(45) Veröffentlichungstag und Bekanntmachung des Hinweises auf die Patenterteilung: **28.04.1993**
(21) Anmeldenummer: 89119105.8
(22) Anmeldetag: 14.10.1989
(51) Int. Cl.: F16H 57/00

(54) **Verfahren zur Korrektur von Verzahnungsfehlern**
Process for correcting gear errors
Procédé pour corriger l'erreur d'engrenage

(30) Priorität: 24.12.1988 DE 3843955
(43) Veröffentlichungstag der Anmeldung: 04.07.1990
(73) Patentinhaber: M.A.N.-ROLAND Druckmaschinen Aktiengesellschaft, 63012 Offenbach (DE)
(72) Erfinder: Melzer, Rudolf, D-6452 Hainburg (DE); Gensheimer, Valentin, D-6052 Mühlheim/Main (DE)
(74) Vertreter: Marek, Joachim, Dipl.-Ing.

(56) Entgegenhaltungen:
- DE-A- 2 914 318
- DE-A- 3 726 233
- FR-A- 2 282 967

## Beschreibung

Die Erfindung betrifft ein Verfahren zur Korrektur von Verzahnungsfehlern in einer Zahnradpaarung mit Hilfe von Teilkreisverschiebung. Ein solches Verfahren ist in der DE-A-3 726 233 beschrieben.

Die Verzahnungen normaler Stirnradgetriebe erzeugen im Betrieb Schwingungen aufgrund von Fehlern in der Verzahnung, die bei der Herstellung entstanden sind. Als Fehler treten Unrundheit der Verzahnung, Versatz der Achse und Einflüsse der Lagerung des jeweiligen Getriebeteiles auf. Die genannten Probleme wirken sich besonders stark aus, wenn z. B. in einer Druckmaschine Bogentransporttrommeln mit je zwei Übergabestellen verwendet werden. Ein an dieser Getriebeposition einzusetzendes und aufgrund der genannten Bedingung sogenannt doppeltgroßes Zahnrad wird unter vereinfachten Bedingungen für jede der beiden Übergabestellen unterschiedliche Toleranzen bzw. Fertigungsfehler in der Verzahnung aufweisen. Diese Fehler führen zu unterschiedlichen Übergabepositionen der betreffenden Bogentransporttrommel. Die Druckqualität kann dann nicht mehr gleichbleibend gewährleistet werden, da häufig ein rythmischer Versatz der Drucke von Bogen zu Bogen auftritt.

In der DE-A-3 726 233 ist ein Verfahren und eine Vorrichtung zum Ausgleich von Drehwinkelfehlern in Zahnradgetrieben, vorzugsweise im Antrieb von Druckmaschinen, beschrieben. Das Verfahren und die Vorrichtung verwenden zur Korrektur die Schwingungen einer Welle, die durch eine Differenzmeßanlage erfaßt werden. In einer Meßwertverarbeitung wird der Drehwinkelfehler der jeweiligen Welle nach Betrag und Phase ermittelt und anschließend durch eine dem Drehwinkelfehler entgegenwirkende Radialverstellung kompensiert. Dazu ist auf der jeweiligen Welle ein um den ermittelten Betrag radialverschiebbarer Zahnkranz angeordnet.

Sowohl das geschilderte Verfahren als auch die zugehörige Vorrichtung sind sehr kompliziert. Im Grunde werden hier alle aus dem Antriebsstrang an einer Antriebsstelle innerhalb der Druckmaschine ankommenden Schwingungen ermittelt und als Fehler an dieser einen Stelle angezeigt. Dazu ist es notwendig, daß das gesamte Getriebe zuerst komplett montiert wird. Aus diesem Grund wird ein einfacheres Verfahren zur Verzahnungskorrektur angestrebt.

Der Erfindung liegt daher die Aufgabe zugrunde, ein Verfahren zum Ausgleich von Drehwinkelfehlern zu schaffen, das während der Montage auf einfache Weise anwendbar ist und eine Zahnradposition mit exakt reproduzierbarem Sitz auf der Welle erzeugt.

Diese Aufgabe wird erfindungsgemäß entsprechend den Merkmalen des Anspruchs 1 gelöst. Hierbei ist als besonderer Vorteil anzusehen, daß die Position des Zahnrades nach dem Ausrichten durch die formschlüssige Verbindung exakt festgelegt ist. Es sind keine feinfühligen Einstellvorgänge notwendig, die ein Reproduzieren dieser Position erschweren würden. Besonders vorteilhaft ist weiterhin, daß die Zahnradverbindung zur Welle auf diese Weise sehr stabil und günstig für die Schwingungsdämpfung im Getriebe ausgelegt werden kann.

Die Erfindung wird im Folgenden an einem Ausführungsbeispiel näher erläutert.

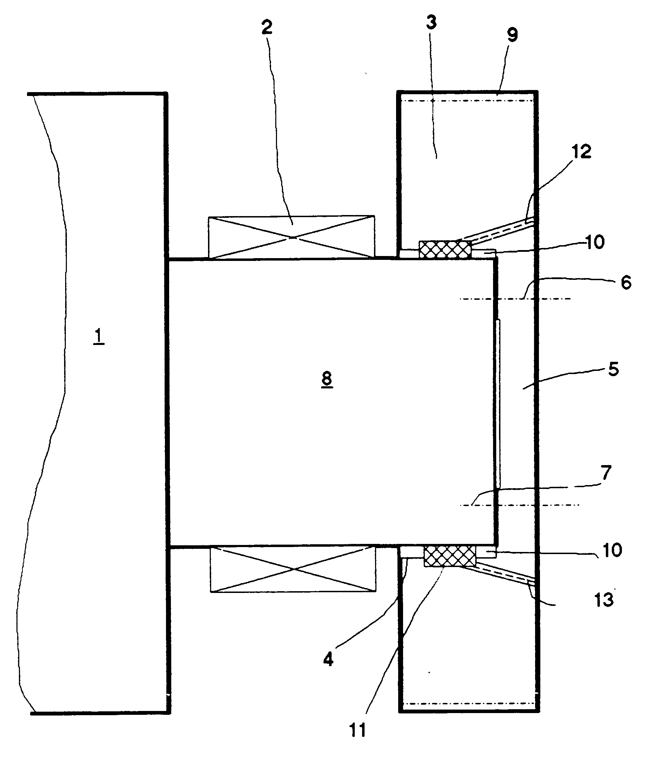

Die einzige Figur zeigt
ein Montageschema eines Zahnrades.

Als anzutreibendes Bauteil ist beispielsweise ein Druckzylinder 1 oder eine Bogentransporttrommel einer Druckmaschine vorgesehen. Der Druckzylinder 1 wird mit aufgezogenen Lagern 2 und angeflanschtem Zahnrad 3 in einer Meßvorrichtung eingelegt. Dabei stützt sich die Einheit aus Druckzylinder 1, Lager 2 und Zahnrad 3 an den Lagern 2 z.B. auf Prismen ab und wird auf diese Weise parallel zu einer Meßachse geführt, in der ein Meßzahnrad gelagert ist. Das Zahnrad 3 besitzt eine Bohrung 4 etwa mit Wellendurchmesser, die nicht als Durchgangsbohrung ausgeführt ist. Die Bohrung 4 weist ein Spiel 10 gegenüber einem Wellenzapfen 8 am Druckzylinder 1 auf. Eine stirnseitig verbleibende Wand 5 ist mit Bohrungen 6 versehen (meist 4 oder 6 Stück), die mit Befestigungsbohrungen 7 in der Stirnseite des Wellenzapfens 8 korrespondieren. Ein Hilfsantrieb versetzt die genannte Einheit langsam in Drehung. Das parallel zur Halterung des Druckzylinders 1 montierte Meßrad greift in das auszurichtende Zahnrad 3 ein. An dem Meßzahnrad und am Zahnrad 3 selbst sind Drehwinkelgeber angebracht, die mit Meßgeräten zur Durchführung einer Einflankenwälzprüfung gekoppelt sind. Hierbei werden die beiden miteinander ablaufenden Zahnräder jeweils an einer Flanke in Kontakt gehalten und wenigstens über eine volle Umdrehung gegeneinander abgewälzt. Mit Hilfe der Drehwinkelgeber wird dabei aufgezeichnet, wie der Ablauf der beiden in Eingriff stehenden Teile relativ zueinander erfolgt ist. Die Drehwinkelabweichungen können so exakt aufgezeichnet werden. In die Drehwinkelabweichung zwischen dem Meßrad und der Einheit aus Druckzylinder 1, Lager 2 und Zahnrad 3 gehen sowohl Exzentrizitäten des Wellenzapfens 8, Unrundheiten der Lager 2 als auch Fertigungsungenauigkeiten an der Verzahnung 9 selbst ein, d.h. es wird ein sogenannter Summenfehler aufgenommen.

Zum Ausgleich aller dieser Fehler wird die Lage des Zahnrades 3 auf dem Wellenzapfen 8 verändert. Zu diesem Zweck ist ja die Bohrung 4 des Zahnrades 3 gegenüber dem Wellenzapfen 8 mit dem Spiel 10 versehen. Dieses Spiel 10 ist in der Darstellung übertrieben groß eingezeichnet, um den Zusammenhang zu verdeutlichen. Das Zahnrad 3 wird nun so verschoben, daß sich in Bezug auf alle vorhandenen Fehler ein optimaler Sitz zwischen Zahnrad 3 und Druckzylinder 1 ergibt, wobei die Drehwinkelabweichungen beseitigt bzw. minimiert werden. In dieser Position wird das Zahnrad 3 vorläufig mit Klemmschrauben, die das Zahnrad 3 stirnseitig mit dem Wellenzapfen 8 verbinden, fixiert. Die endgültige Befestigung erfolgt aber erst danach, indem der Hohlraum zwischen Zahnrad 3 und Wellenzapfen 8 mit einer Kunststoffmasse z.B. SKC 60 ausgefüllt wird. Dazu ist in der Bohrung 4 des Zahnrades 3 eine flache Nut 11 eingedreht. Sie erstreckt sich mittig zum Sitz des Zahnrades 3 innerhalb der Bohrung 4. Die Nut 11 soll ca. 65% bis 80% des Sitzes abdecken. Ihre Tiefe liegt etwa bei 1 bis 2 mm, sodaß sich der Bohrungsdurchmesser hier um 2 bis 4 mm vergrößert. Die bleibenden Stege mit dem ursprünglichen Durchmesser am Rand der Bohrung 4 zu beiden Seiten der Nut 11 dienen der groben Führung des Zahnrades 3 bei der Vormontage. Eine Zufuhrbohrung 12 und eine dazu um 180 Grad versetzt angebrachte Entlüftungsbohrung 13 verbinden die Bohrung 4 im Bereich der Nut 11 mit der geschlossenen Stirnseite des Zahnrades 3. Beim Ausspritzen der Nut 11 wird die Kunststoffmasse so lange unter Druck durch die Zufuhrbohrung 12 eingebracht, bis sie an der Entlüftungsbohrung 13 wieder austritt. Die Kunststoffmasse befindet sich dann überall in der Nut 11 und wird durch den engen Spalt des Spiels 10 am Austritt nach den Stirnseiten hin gehindert. Der Sitz des Zahnrades 3 auf dem Wellenzapfen 8 ist jetzt in der Mitte der Welle-Nabe-Verbindung absolut spielfrei. Vor allen Dingen ist nun aber der Sitz des Zahnrades 3 auch der Geometrie von Wellenzapfen 8 und Bohrung 4 optimal angepaßt und sicher auf dem Wellenzapfen 8 eingepaßt. Diese Wellen-Naben-Verbindung ist in ihrer Lage exakt reproduzierbar nach einer Demontage wieder zu montieren. An der Verzahnung muß zur Korrektur von Lagefehlern nichts geändert werden. Das Druckergebnis ist nach Durchführung der Montage entsprechend dem erfindungsgemäßen Verfahren einwandfrei. Die Montage selbst wird komplett d.h. inclusive Lagekorrektur vorab durchgeführt und muß nicht mehr mit viel Aufwand innerhalb der Druckmaschine bewerkstelligt werden. Die Ausrichtung kann im Übrigen für jeden Zahneingriff einzeln, sollte dabei allerdings am jeweils angetriebenen Zahnrad vorgenommen werden.

Die vorgeschlagene Verfahrensweise ist in Teilbereichen abänderbar. Das betrifft sowohl das Meßverfahren, als auch die kraftschlüssige und formschlüssige Verbindung des Zahnrades 3 mit dem Wellenzapfen 8. Hierbei können andere Verfahrensweisen eingesetzt werden, die auf jeden Fall auch zu dem Ergebnis führen müssen, daß das Zahnrad spielfrei in einer die Summentoleranz aller Lage- und Fertigungsfehler an der angetriebenen Einheit optimal ausgleichenden Position auf dem Wellenzapfen 8 befestigt wird.

Zum Ausmessen kann selbstverständlich als Vergleichsmerkmal auch die Oberfläche des Druckzylinders 1 verwendet werden. Die Justierung würde dann durch optimale Ausrichtung des Teilkreises der Verzahnung 9 in Bezug auf die Oberflächenform des Druckzylinders 1 erfolgen. Insbesondere soll dann die Abweichung der Verzahnung von ihrer Sollage im Bereich der Bogenübergaben minimal sein.

## Patentansprüche

1. Verfahren zur Korrektur von Verzahnungsfehlern in einer Zahnradpaarung mit Hilfe einer Teilkreisverschiebung und folgenden Schritten:
- zunächst wird das angetriebene Zahnrad (3) der Zahnradpaarung kraftschlüssig mit dem anzutreibenden Bauteil (Welle (8)), beispielsweise dem Druckzylinder (1) einer Druckmaschine, verbunden, wobei zwischen Zahnrad (3) und anzutreibendem Bauteil geringes radiales Spiel (10) vorhanden ist,
- danach werden die bei einem Meßvorgang ermittelten Drehwinkelfehler in radiale Abweichungen der Verzahnung umgerechnet,
- dann wird das angetriebene Zahnrad (3) radial so verschoben, daß die radiale Abweichung der Verzahnung von ihrer Ideallage minimal ist,
- und schließlich wird das Zahnrad (3) in dieser korrigierten Lage mit der Welle (8) formschlüssig und spiel frei verbunden, dadurch gekennzeichnet, daß der Meßvorgang darin besteht, das Zahnrad (3) im montierten Zustand mit aufgezogener Lagerung (2) und Abstützung auf der Lagerung in einer Meßeinrichtung einer Einflankenwälzprüfung zu unterziehen.

2. Verfahren nach Anspruch 1,
**dadurch gekennzeichnet,**
daß das Zahnrad (3) in seiner korrigierten Lage stirnseitig mit dem Wellenzapfen (8) verschraubt und ein Hohlraum am gesamten Umfang im Bereich des Spiels (10) mit aushärtendem Werkstoff ausgefüllt wird.

3. Verfahren nach Anspruch 2,
**dadurch gekennzeichnet**,
daß als aushärtender Werkstoff ein Kunststoff z. B. SKC 60 verwendet wird.

4. Zahnrad zur Verwendung in einem Verfahren nach
Anspruch 2 oder 3,
**dadurch gekennzeichnet**,
daß das Zahnrad (3) mit einer geringfügig gegenüber dem Durchmesser des Wellenzapfens (8) vergrößerten Bohrung (4) versehen ist, sodaß ein Spiel (10) vorhanden ist, daß im Bereich der Mitte des Sitzes in der Bohrung (4) eine Nut (11) vorgesehen ist, und daß eine Zufuhrbohrung (12) und um 180 Grad dazu versetzt eine Entlüftungsbohrung (13) zum Einbringen des aushärtenden Werkstoffes zwischen der Stirnseite des Zahnrades (3) und der Nut (11) vorgesehen sind.

5. Zahnrad nach Anspruch 4,
**dadurch gekennzeichnet**,
daß die Nut (11) zwischen 60 und 85% der Breite des Sitzes des Zahnrades (3) einnimmt und 1 bis 2 mm tief ist.

## Claims

1. Process for correcting tooth errors in a pair of gears with the aid of a pitch circle displacement in the following steps:
- first the driven gear (3) of the pair of gears is connected positively with the component (shaft (8)) to be driven, for example the impression cylinder (1) of a printing press, whereby between gear (3) and the component to be driven there is present a little radial play (10),
- thereafter the turning angle errors determined by a measuring process are converted into radial deviations of the toothing,
- then the driven gear (3) is radially so displaced that the radial deviation of the toothing from its ideal position is minimum,
- and finally the gear (3) is connected in this corrected position positively and play free with the shaft (8), characterised in that the measuring process consists in that the gear (3) in assembled condition with a fitted bearing (2) and supported on the bearing in a measuring device is subjected to a single flank rolling test.

2. Process according to Claim 1, characterised in that the gear (3) is bolted in its correct position at its end face with the shaft trunnion (8) and a hollow space about the entire periphery and the region of the play (10) is filled with hardening material.

3. Process according to Claim 2, characterised in that as hardening material a plastics is used, e.g. SKC 60.

4. Gear for use in a process according to Claim 2 or 3, characterised in that the gear (3) is provided with a bore (4) slightly enlarged relative to the diameter of the shaft trunnion (8) so that a play (10) is present, that in the region of the middle of the seating in the bore (4) a groove (11) is provided and that a feed bore (12) and offset by 180° thereto a ventilation bore (13) are provided for introduction of the hardening material between the end face of the gear (3) and the groove (11).

5. Gear according to Claim 4, characterised in that the groove (11) takes up between 60 and 85% of the width of the seating of the gear (3) and is 1 to 2 mm deep.

## Revendications

1. Procédé pour la correction de défauts d'engrenage dans l'appariement de roues dentées à l'aide d'un déplacement circulaire partiel et des étapes suivantes :
- tout d'abord, la roue dentée entraînée (3) de la paire de roues dentées est reliée par adhérence a l'élément devant être entraîné (arbre 8), par exemple le cylindre d'impression (1) d'une imprimante, un faible jeu radial (10) existant entre la roue dentée (3) et l'élément devant être entraîné,
- ensuite, les erreurs d'écarts angulaires détectées par un processus de mesure sont converties en écarts radiaux de la denture,
- puis, la roue dentée entraînée (3) est déplacée radialement de sorte que l'écart radial de la denture par rapport à sa position idéale est minimal,
- et enfin, dans cette position corrigée, la roue dentée (3) est reliée mécaniquement et sans jeu à l'arbre (8),
caractérisé en ce que le processus de mesure consiste à soumettre la roue dentée (3), dans l'état monté, avec le palier (2) et un appui sur le palier, à une vérification d'un seul flanc, dans un dispositif de mesure.

2. Procédé selon la revendication 1,
caractérisé en ce que la roue dentée (3), dans sa position corrigée, est vissée frontalement au tourillon de l'arbre (8), et un espace vide, sur toute la périphérie, dans la zone du jeu (10), est rempli d'un matériau durcissant.

3. Procédé selon la revendication 2,
caractérisé en ce qu'une matière synthétique, par exemple SKC 60, est utilisée comme matériau durcissant.

4. Roue dentée utilisable dans un procédé selon la revendication 2 ou 3,
caractérisée en ce que la roue dentée (3) est munie d'un perçage (4) légèrement agrandi par rapport au diamètre du tourillon de l'arbre (8), de sorte qu'il existe un jeu (10), en ce que, dans la zone du milieu du siège, une gorge (11) est prévue dans le perçage (4) et en ce qu'un perçage d'amenée (12) et un perçage de mise à l'atmosphère (13) déplacé de 180 degrés par rapport à celui-ci, sont prévus pour la mise en place du matériau durcissant entre la face frontale de la roue dentée (3) et la gorge (11).

5. Roue dentée selon la revendication 4,
caractérisée en ce que la gorge (11) occupe entre 60 et 80 % de la largeur du siège de la roue dentée (3) et est profonde de 1 à 2 mm.
